# EUROPEAN PATENT APPLICATION

(11) **EP 2 187 639 A1**
(43) Date of publication of application: **19.05.2010**
(21) Application number: 08291078.7
(22) Date of filing: 17.11.2008
(51) Int. Cl.: H04N 7/24

(54) **System for personalized multimedia-asset provisioning, a personalization module, a corresponding client device and a related server device**

(71) Applicant: Alcatel Lucent, 75008 Paris (FR)
(72) Inventor: Verzijp, Nico Victor, B-2018 Antwerpen (BE); Huysegems, Rafaël, B-2800 Walem (Mechelen) (BE); Van den Berghe, Steven, B-9620 Zottegem (BE)
(74) Representative: Narmon, Gisèle Marie Thérèse

(57) **Abstract**

The present invention relates to a System, a related client device and a related server device, for personalized multimedia-asset provisioning from a server device to a client device where the server device and the client device are coupled over a communication-link. The multimedia-asset comprises a plurality of multimedia-asset sections for sequential provisioning to said client device. The system includes multimedia asset subset selection part that is able to select at least one subset of multimedia asset sections from the plurality of the multimedia asset sections for personalizing the provisioning of the multimedia asset based on at least one asset provisioning rule associated to the multimedia asset. Further the system includes a multimedia asset sequencing part that is able to resolve a sequence for provisioning the multimedia asset sections of each of the at least one subset of multimedia asset sections based on the at least one asset provisioning rule associated to said multimedia asset.

## Description

The present invention relates to a System for personalized multimedia-asset provisioning according to the preamble of claim 1, a Personalization module for use in a system for personalized multimedia-asset provisioning according to the preamble of claim 4, a corresponding Client device according to the preamble of claim 5, a Server device according to the preamble of claim 6 and a method according to the preamble of claim 7.

Such a system and related devices are already well known in the art.

Digital (video) content today must to be consumed as the content provider offers it. In case of a feature movie of 2 hours, the consumer is more or less forced to watch these 2 hours. Options that can be used to reduce the watch time are fast-forward functionality, skip to another chapter or even to watch the content partially. These options give an inferior viewing experience where important scenes can be missed or the story line is broken.

On-demand video content is currently available as an un-devisable asset. In case alternative versions (having different lengths) of the same video asset exist, this requires that:
1. The end-user looks up these alternatives and selects the one with the preferred duration.
2. Multiple copies of a slightly different video asset are stored in the on-line video store. In an example a first Asset is the original video with the default length, a second asset, asset B is a summarized version of the same content item, while the third Asset, Asset C is the extended version of the same content. This requires a (large) storage overhead, as the three content items are largely identical. Indeed, Asset B is a subset of Asset A, while Asset A is a subset of Asset C.
3. Once a selection is made, there are no ways to re-select a different duration for the remainder of the video. There's only the option to start over from the beginning.

In any of the previously described cases an entire multimedia asset is forwarded from a server device towards (at least one) client device using bandwidth between client and server in a bandwidth inefficient way. Indeed, in case the user is only interested in parts of the content, the content is still delivered in its entirety to the client (progressive download case). Real-time streaming offers some improvement in case it supports trick-modes (fast-forward), however this does not allow to a user to select alternative paths, neither to skip complete parts.

An object of the present invention is to provide a System for personalized multimedia-asset provisioning and related devices of the above known type but wherein multimedia asset is provisioned in a more bandwidth efficient way.

According to the invention, this object is achieved by the system described in claim 1, the personalizing module described in claim 4, the client device described in claim 5 and the server device as described in claim 6.

Indeed, due to the fact that first the multimedia-asset comprises a plurality of multimedia-asset sections wherefrom all or a subset of these sections sequentially can be provisioned to the client device CD, the provisioning of the asset can be tailored to the needs of the user by only provisioning the asset sections required by the user and in this way provisioning a multimedia asset in an bandwidth efficient manner. The system therefore comprises a multimedia asset subset selection part that is able to select at least one subset of multimedia asset sections from a plurality of said multimedia asset sections based on at least one asset provisioning rule associated to said multimedia asset and further a multimedia asset sequencing part that is able to resolve a sequence for provisioning the multimedia asset sections of each of the at least one subset of multimedia asset sections for personalizing the provisioning of the multimedia asset where the sequencing is based on the at least one asset provisioning rule associated to said multimedia asset.

The at least one asset provisioning rule defines how the different parts can be glued together to form a continuous experience.

The at least one asset provisioning rule associated to the multimedia asset may be a guideline that can be seen as a description of the different paths the end-user at the client device may take through the multimedia asset sections.

The commonality between the available paths lies in the fact that the end-user has a good understanding of the whole content. Indeed, selecting random sections would result in an incoherent and chaotic experience for the user. The difference however, between the paths, is that depending on the profile of the end-user in terms of available knowledge on the subject of the multimedia asset and other personal circumstances like available time of the end-user another selection can be made from the multimedia asset sections (a bigger selection if the user has less knowledge and/or more time for viewing or a smaller selection if the end-user is knowledgeable on the subject or has little time for consuming the multimedia asset). This understanding is possible because it is the content producer who determines the possible paths, i.e. the selection of assets and associated sequence of these asset sections.

Hence a precondition is that the path between the multimedia asset sections, i.e. the selection of the multimedia asset sections and the associated sequence of provisioning the selected multimedia asset sections to the client device is such that the end-user is provided with the information required for the end-user to have complete information for understanding the subject and suiting to conditions of the end-user.

Indeed, the invention makes it possible for a client to decide on the duration (on beforehand, but even during play).

Another characterizing embodiment of the present invention is described in the system according to claim 2 and the related method according to claim 8.

The system and method further is adapted to provision a first subset of multimedia asset sections of the at least one subset of multimedia asset sections selected from the plurality of the multimedia asset sections according to the sequence resolved for provisioning the first subset of multimedia asset sections.

Still another characterizing embodiment of the present invention is described in claim 3.

The system for personalized multimedia-asset provisioning further is by means of the multimedia asset subset selection part able to at a user trigger, to switch, from provisioning of a first subset of multimedia asset sections to the provisioning of a second subset of multimedia asset sections of said at least one subset of multimedia asset sections selected from said plurality of said multimedia asset sections according to the sequence as resolved for provisioning the second subset of multimedia asset sections.

A user may decide that for one or the other reason he/she prefers to consume an extended or reduced subset of multimedia asset sections and therefore switch the provisioning from one first initial subset of multimedia asset sections to a second subset of multimedia asset sections.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
Fig. 1 represents a functional representation of the system for personalized multimedia asset provisioning according to the present invention.
Fig. 2 represents an embodiment of the present invention wherein a number of VOD asset sections are presented in their corresponding provisioning order.

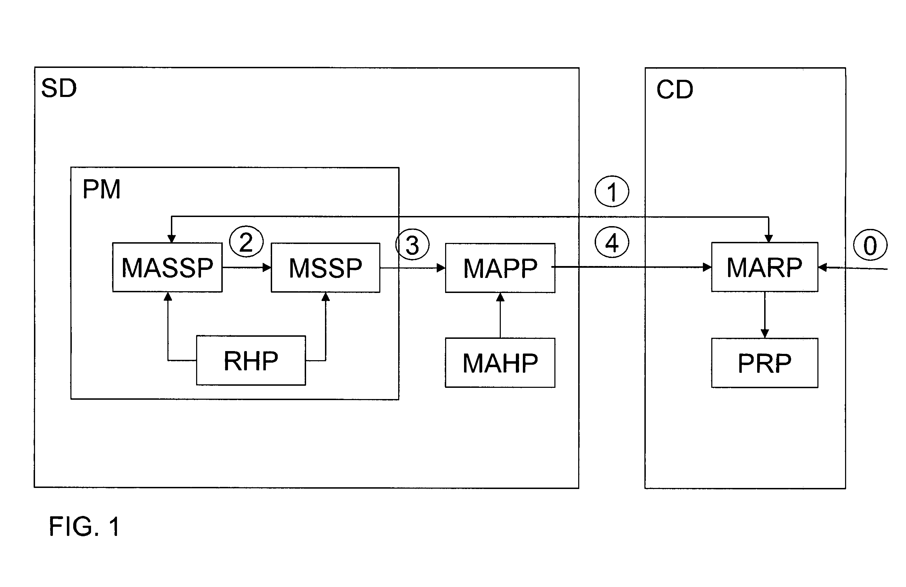

In the following paragraphs, referring to the drawing in FIG.1, an implementation of the system is described. In the second paragraph, all connections between mentioned elements are defined.

Subsequently all relevant functional means of the mentioned system as presented in FIG.1 are described followed by a description of all interconnections. In the succeeding paragraph the actual execution of the communication system is described.

The system for personalized multimedia-asset provisioning first comprises server device SD and a client device CD.

The server device SD is able to provision personalized multimedia-assets to a client device CD. This multimedia assets may be stored at the server or at the server side on a device coupled to the server device SD and be provisioned to the client device CD at request of the client device CD.

The server device SD may be a video on demand server, an e-book server holding a plurality of e-books for training-purposes, an image database or any other collection of large digital assets that may benefit from consumption guidelines.

The server device and the client device are coupled over a communication link which may vary based on the application. This communication link may be a direct short-link like USB, bluetooth, WIFI but may also be implemented as a communications network like the internet or a mobile connection. As bandwidth is very critical in mobile communication networks, this invention is, although not restricted to, of particular interest there.

The server device SD first comprises a multimedia asset subset selection part MASSP that is adapted to select at least one subset of multimedia asset sections from a plurality of multimedia asset sections, for personalizing the provisioning of the multimedia asset based on at least one asset provisioning rule associated to the multimedia asset. The MASSP has the context knowledge for each individual user which path he/she has currently selected. By using the content rules form the RHP, the MASSP also has the knowledge of all other available paths in the content asset.

The server device SD further comprises a multimedia asset sequencing part MASP that in turn is adapted to resolve the sequence for provisioning the multimedia asset sections for each of the at least one subset of multimedia asset sections based on the at least one asset provisioning rule associated to the multimedia asset. The MASP has the context knowledge for each individual user which content section he/she has currently selected. By using the content rules from the RHP, the MASP also has the knowledge of possible next sections.

The server device SD further comprises a multimedia asset holding part MAHP that is adapted to store the all multimedia asset sections. This multimedia asset holding part MAHP being a database (a container) wherein all possible multimedia asset sections that belong to a certain multimedia asset are present. This database may store a plurality of multimedia assets each with their corresponding multimedia asset sections. Such multimedia assets may be any video on demand asset, further referred to as VOD asset, any e-book or on-line presentation, digital photo albums or any other type of digital content that may be accompanied by consumption guidelines (further called asset provisioning rules). In general, the MAHP can also contain atomic media assets (for which no personalization is possible).

Additionally there is a Rule Holding Part RHP that is able to store at least one asset provisioning rule that is associated to a multimedia asset. Such rule could be: e.g. section 4 can be skipped if you have already some background in a particular field, section 6 presents an example and may be skipped without impeding the understanding of the next chapters, etc or another rule could be section 7 and 8 cover the same topic, but 8 is an alternative child-friendly version.

Further the server device SD includes the multimedia asset provisioning part MAPP that is adapted to provision to the client device CD, a first subset of multimedia asset sections (selected from the entire set of asset sections that belong to the multimedia asset) of the at least one subset of multimedia asset sections that are in turn selected from a plurality of multimedia asset sections according to the sequence resolved for provisioning the first subset of multimedia asset sections. The provisioning of a media asset section to the client can be done either in a streaming mode or in a progressive download mode. Before this media asset section is completely consumed by the CD, the CD may ask for the next media asset section (belonging to the same path or to a different one). The MAPP is instructed to start delivering a media section to the user (FIG1. arrow 3: select new media section from current path). The media data in itself is to be fetched by the MAPP from the MAHP. Once this media section is delivered, the MAPP waits for further instructions from the PM. In case of non-personalized media, there can be a single instruction given to the MAPP, to deliver the complete asset.

The multimedia asset subset selection part MASSP in addition is adapted to, at receipt of a user trigger (FIG.1 arrow 1: from CD to SD: next element, other subset, list subsets from SD to CD (optional): subset list, no other subsets available), to switch to the provisioning of a second subset of multimedia asset sections of the at least one subset of multimedia asset sections selected from the plurality of the multimedia asset sections according to said sequence resolved for provisioning said second subset of multimedia asset sections. The MASSP remembers the path that is selected by the user. Initially there can be a default path chosen (in case user has not given any feedback). Each user trigger will result in a re-evaluation of the media asset rules attached to the current asset. In its most simple case, the user asks for the next section. In this case, the MASSP should not re-evaluate the rules, but simply pass this request to the MASP. In the other cases, the user asks for a "shorter" (time constraints or partially known topic) or a "more elaborate" (interest of user has increased) version of the content. Some dedicated buttons on a user remote may be offered for this purpose. Users may decide to select the "shorter" (or longer) version recursively. The MASSP will evaluate the available paths (described in the RHP) and select a shorter or longer version, as long as such a version can be constructed. If so, the MASSP will instruct the MASP the newly selected path (FIG 1 arrow 2: select (new) path (=subset of media assets)). The MASP will re-evaluate the rules in order to select the next section on this newly selected path. In both cases (shortenings or extensions are available or not), simple feedback to the user can be given (FIG 1 arrow 1) indicating the result.

At receipt of the user trigger the server device SD may switch the provisioning from the first subset of multimedia asset sections towards the second multimedia asset sections where the second subset partially includes other multimedia asset sections with other content better matching with the user information needs, being additional information on a certain subject or contrary less information on a certain subject due to the background, skills and/or available time of the user. It is to be noted that there can be different ways a user can asks for a switch. This can be explicit (FIG1. arrow 0) where user uses some kind of input device (e.g. a remote control) to indicate his/her wish or implicit where there is a profile stored at the CD. Remark however, that profile based selection can only make its decisions based on interest domains of the user but is never able to capture the available time as user has. As such, these should always be triggered explicitly by the user.

The user trigger receiving part is coupled with an output to an input of the multimedia asset subset selection part MASSP that is coupled with an output to an input of the multimedia asset sequencing part MASP that in turn is coupled with an output to the multimedia asset provisioning part MAPP. The multimedia assets holding part MAHP is coupled with an output to an input of the multimedia asset provisioning part MAPP. The Rule holding part RHP further is coupled with an output to an input of the multimedia asset subset selecting part MASSP and additionally coupled with an output to an input of the multimedia asset sequencing part MASP. Further the multimedia asset subset selection part MASSP has an input/output that is at the same time an input/output terminal of the server device SD which is coupled to an input/output of the multimedia asset receiving part MARP. Finally the multimedia asset provisioning part MAPP has an output that is at the same time an output-terminal of the server device SD.

The server device SD and the client device CD are coupled over a communications link.

The client device CD comprises a multimedia asset receiving part MARP that is adapted to receive multimedia asset sections provide by the server device SD. Specific to this MARP is that it may request the next media asset section before the current media asset section is completely consumed by the user. This happens without user interaction as long as no path switches are requested. A path switch (explicit path, shorter, longer) will be remembered by the MARP and result in the request of a media asset from another path once the current media asset section is nearly completed. The MARP receives the user input for path switch either explicitly (FIG1. arrow 0: user interaction) or implicitly for a stored user profile in the CD.

The client device further includes a Multimedia asset section presentation part PRP that in turn is adapted to present the multimedia asset section received from the server device at the client device towards the end-user.

The Multimedia asset section presentation part PRP may comprise a screen like a LCD screen and/or speakers for presenting VOD assets, for presenting e-books or relevant parts thereof, or digital photos.

The multimedia asset receiving part MARP has an input that is at the same time an input terminal of the server device SD. The multimedia asset receiving part MARP further is coupled to the Multimedia asset section presentation part PRP.

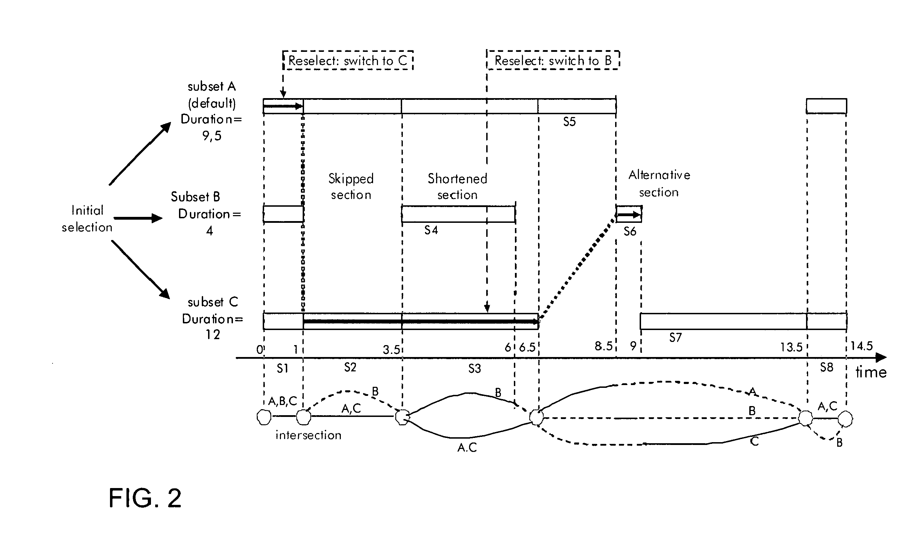

Additionally the multimedia asset receiving part MARP has an input/output that is at the same time an input/output terminal of the client device CD which is coupled to an input/output of the multimedia asset subset selection part MASSP of the SD. In order to explain the execution of the present invention it is supposed that there is a multimedia asset like a VOD asset available for presentation to end-users where the asset e.g. is intended for training purposes. In order to personalize this training, the VOD asset is divided in a number of sections in such way that each target-group is reached. Moreover, using this method of multimedia asset provisioning is more bandwidth efficient due to the fact that only multimedia asset sections that are relevant to the end-user are provisioned over the connection between the server device and the client device. Furthermore in case multimedia assets provisioned entail costs only the really consumed multimedia asset sections are paid for. This entire VOD asset includes eight different asset sections S1, S2, S3, S4, S5, S6, S7 and S8. These sections S1, S2, S3, S4, S5, S6, S7 and S8 are shown in figure 2. For section S3, there is also a shortened section S4 available. With respect to section 5, 6 and 7, i.e. S5, S6, S7 it is to be noticed that they are alternative sections of different length and of course including different information where one of three can be provisioned based on the end-user needs.

First the multimedia asset subset selection part MASSP will select at least one subset of multimedia asset sections from said plurality of said multimedia asset sections S1, S2, S3, S4, S5, S6, S7 and S8 for personalizing the provisioning of the multimedia asset based on at least one asset provisioning rule associated to the multimedia asset. In our present example three subsets are available as is presented in FIG.2

The first asset provisioning rule may define the default duration of the content as being obtained by concatenating sections S1, S2, S3, S5 and S8. The second provisioning rule may define a shortened version (with duration X) of the same asset, obtained by concatenating sections S1, S4 and S6. And further for this embodiment, the third rule may define an extended version (with duration Y) obtained by concatenating sections S1, S2, S3, S7 and S8. These rules define a graph in the content where there are well defined intersection points at which a switch to another path can be done.

Based hereon the multimedia asset subset selecting part MASSP has knowledge of the three subsets of multimedia asset sections and their durations.

Only the third subset provides the maximum amount of information and hence consumes maximum bandwidth at time of provisioning the full VOD asset. In case of provisioning the other subsets of the VOD asset compared to the third subset bandwidth consumptions savings are made by personalizing the provisioned multimedia asset here being the VOD asset.

The multimedia asset sequencing part MSSP for each of the before described subsets, resolves the sequence for provisioning the multimedia asset sections of each of the subsets 1 , 2 and 3 based on the description in the corresponding asset provisioning rules associated to the multimedia asset. These rules are maintained in the Rule Holding part RHP. It should be noted that once a path is selected, the sequence of sections is fixed (otherwise this would give rise to another path). However, the MSSP is the part that will evaluate the details of each path in order to determine that next section. The MASSP has a global view on the content, i.e. the list of available paths and their corresponding durations.

Subsequently, the multimedia asset provisioning part MAPP, provisions to the client device CD, a subset of multimedia asset sections, as instructed by the PM. This choice of the first section is based on a user selection signal received at the multimedia asset subset selection part MASSP that is presented in the foregoing description and figures and selects of the at least one subset of multimedia asset sections selected from said plurality of said multimedia asset sections according to the sequence resolved for provisioning the first section from the subset of multimedia asset sections. Initial selection can be a default path for clients that are not equipped with a MARP compliant as described in the above.

The provisioned first subset of multimedia asset sections is received at the client device CD by means of the multimedia asset receiving part MARP and presented at the multimedia asset presenting part being a screen with associated speakers in this example.

Then at a certain moment in time the end-user triggers the multimedia asset subset selection part MASSP to switch from the provisioning of the first subset to the provisioning of the second subset of multimedia asset sections. Then the reduced or extended subset of multimedia asset sections is presented to the end-user by means of the multimedia asset presenting part PRP.

Important to note is that within a section, there cannot be a change to another path. The section must be consumed as defined for that particular path. Path changes can only occur at the intersection points (see FIG2).

A further example could be the provisioning of e-books by an e-book server to an e-book reader device where the e-book is divided in chapters and the media asset rules provide with information on relevance of each of the chapters of the e-book for the type of readers. In such case, the user may give feedback indicating "more" or "less" information and the feedback may not be tied to available time (as was present for the VOD case) but to the interest or knowledge of that user.

Another example could be an on-line adventure game, where only the data required for the currently selected path is provided to the end-user. Depending on the users' actions another path may be selected (implicit or explicit) and provided. A media asset section is the data related to a sequence of events that cannot be split in order to achieve comprehensive game play.

Yet another example could be a personalized quiz. The SD contains all possible questions (and answers) but each of these questions has its own level of difficulty. Depending on the users' knowledge a certain difficulty level can be set. In this example the path that a user selects corresponds to a difficulty level. During play, the user may switch to another difficulty level. A media asset section can be a single question (and answer) or a group of questions.

It is further to be noted that the Personalization Module (PM) can be included in a server device SD, in a client device CD or be include in other network elements.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. System for personalized multimedia-asset provisioning from a server device (SD) to a client device (CD) said server device (SD) and said client device (CD) being coupled over a communication-link, **CHARACTERISED IN THAT** said multimedia-asset comprises a plurality of multimedia-asset sections for sequential provisioning to said client device (CD); said system comprises:
a. a multimedia asset subset selection part (MASSP), adapted to select at least one subset of multimedia asset sections from said plurality of said multimedia asset sections for personalizing said provisioning of said multimedia asset based on at least one asset provisioning rule associated to said multimedia asset; and
b. multimedia asset sequencing part (MSSP), adapted to resolve a sequence for provisioning said multimedia asset sections of each of said at least one subset of multimedia asset sections based on said at least one asset provisioning rule associated to said multimedia asset.

2. System for personalized multimedia-asset according to claim 1, **CHARACTERISED IN THAT** said system further comprises:
c. a multimedia asset provisioning part (MAPP) that is adapted to provision to said client device (CD), a first subset of multimedia asset sections of said at least one subset of multimedia asset sections selected from said plurality of said multimedia asset sections according to said sequence resolved for provisioning said first subset of multimedia asset sections.

3. System for personalized multimedia-asset provisioning according to claim 2, **CHARACTERISED IN THAT** said multimedia asset subset selection part (MASSP) is further adapted to, at user trigger, to switch to the provisioning of a second subset of multimedia asset sections of said at least one subset of multimedia asset sections selected from said plurality of said multimedia asset sections according to said sequence resolved for provisioning said second subset of multimedia asset sections.

4. Personalization module (PM) for use in a system for personalized multimedia-asset provisioning from a server device (SD) to a client device (CD) said server device and said client device (CD) being coupled over a communication-link, **CHARACTERISED IN THAT** said multimedia-asset comprises a plurality of multimedia-asset sections for sequential provisioning to said client device (CD); said device comprises:
a. a multimedia asset subset selection part (MASSP), adapted to select at least one subset of multimedia asset sections from said plurality of said multimedia asset sections for personalizing said provisioning of said multimedia asset based on at least one asset provisioning rule associated to said multimedia asset; and
b. multimedia asset sequencing part (MSSP), adapted to resolve a sequence for provisioning said multimedia asset sections of each of said at least one subset of multimedia asset sections based on said at least one asset provisioning rule associated to said multimedia asset.

5. Client device (CD) for use in system according to claim 1, **CHARACTERISED IN THAT** said client device (CD) includes a device according to claim 4.

6. Server device (SD) for use in system according to claim 1, **CHARACTERISED IN THAT** said server device (SD) includes a device according to claim 4.

7. Method for personalized multimedia-asset provisioning from a server device (SD) to a client device (CD) said server device (SD) and said client device (CD) being coupled over a communication-link, **CHARACTERISED IN THAT** each said multimedia-asset comprises a plurality of multimedia-asset sections for sequential provisioning to said client device (CD); and **in that** said method further comprises the steps of:
b. selecting at least one subset of multimedia asset sections from said plurality of said multimedia asset sections based on at least one asset provisoning rule for asset section selection/combination; and
c. resolving a sequence for provisioning said multimedia asset sections of each of said at least one subset of multimedia asset sections based on said at least one asset provisioning rule associated to said multimedia asset.

8. Method for personalized multimedia-asset provisioning according to claim 7,
**CHARACTERISED IN THAT** said method further comprises the steps of provisioning to said client device (CD), a first subset of multimedia asset sections of said at least one subset of multimedia asset sections selected from said plurality of said multimedia asset sections according to said sequence resolved for provisioning said first subset of multimedia asset sections.
